# EUROPÄISCHE PATENTSCHRIFT

(11) **EP 2 394 543 B1**
(45) Veröffentlichungstag und Bekanntmachung des Hinweises auf die Patenterteilung: **21.08.2013**
(21) Anmeldenummer: 11169091.3
(22) Anmeldetag: 08.06.2011
(51) Int. Cl.: A47J 43/044, A47J 43/07, A47J 43/08

(54) **Handküchengerät mit entsprechendem Werkzeug zur Nahrungsmittelbearbeitung**
Hand-held kitchen appliance with corresponding tool for food processing
Appareil de cuisine manuel doté d'un outil correspondant pour le traitement d'aliments

(30) Priorität: 09.06.2010 DE 102010029891; 10.06.2010 DE 102010029949; 07.06.2011 DE 102011077161
(43) Veröffentlichungstag der Anmeldung: 14.12.2011
(73) Patentinhaber: BSH Bosch und Siemens Hausgeräte GmbH, 81739 München (DE)
(72) Erfinder: Baacke, Bettina, 75172 Pforzheim (DE)

(56) Entgegenhaltungen:
- CH-A- 114 665
- DE-A1- 3 307 023
- DE-A1- 3 542 637
- FR-A- 1 523 423
- US-A- 1 577 615
- US-A1- 2005 128 865

## Beschreibung

### Hintergrund der Erfindung

Die Erfindung betrifft ein Handküchengerät, insbesondere einen Stabmixer, mit einer Koppelstelle für Werkzeuge zur Nahrungsmittelbearbeitung.

### Stand der Technik

Das US-Patent 1,577,615 A offenbart einen Schneebesen, bei dem konzentrisch zueinander angeordnete Besenelemente in entgegengesetzte Richtungen angetrieben werden.

Die Offenlegungsschrift DE 3542637 A1 zeigt ein von Hand zu führendes Haushaltsgerät, dessen Griff verstellbar aus einer flüchtend zu einem Zapfen angeordneten Position in eine quer zu ihm ausgerichtete Position ausgebildet ist. Durch diese erfindungsgemäße Gestaltung soll der Griff je nach Verwendungszweck des Haushaltsgerätes eingestellt werden können.

Aus der Offenlegungsschrift DE 3307023 A1 ist ein Antriebsgerät für Küchenwerkzeuge bekannt, das ein Zwischengetriebe zum gleichzeitigen Antrieb einer schnell laufenden, sowie einer langsam laufenden Antriebswelle vorsieht, speziell ein Planetengetriebe. Die beiden gleichzeitig oder unabhängig voneinander laufenden Antriebswellen lassen sich sowohl in Verbindung mit einem aus dem Stromnetz, als auch aus einem Batteriesatz oder Akkumulator gespeisten Motor mit Vorteil verwenden.

In der Schweizer Patentschrift CH 114 665 A ist ein Schnee- und Schaumschläger gezeigt, der einen aus Drähten gefertigten Schlagkorb aufweist. Innerhalb des Korbes ist in einem Futter ein aus einer Anzahl Schaufeln bestehendes Rührwerk drehbar gelagert, das sich beim Schwingen des Schlägers im Kreise herum in entgegengesetzter Richtung wie dieser dreht.

Die Schrift FR 1 523 423 A zeigt ein Küchengerät mit hakenförmigen Bearbeitungswerkzeugen zur Nahrungsmittelbearbeitung. Die US-Patentanmeldung US 2005/0128865 A1 zeigt einen Handmixer, der einen oder mehrere ergonomisch geformte Handgriffe aufweist.

Die üblichen Handküchengeräte haben sich grundsätzlich bewährt. Sie weisen jedoch insbesondere beim Kneten von zähem Rührgut den Nachteil auf, dass das Rührgut zum Aufsteigen an den sich drehenden Knetwerkzeugen sowie an der Wandung der Rührschüssel neigt und damit die Koppelstelle für die Werkzeuge des Handküchengeräts verschmutzen kann, wodurch der Aufwand zur Reinigung des Geräts zunimmt.

Bekannt sich auch Handrührgeräte, welche zwei Koppelstellen aufweisen, die zwei unterschiedliche Werkzeuge empfangen können. Die Rotationsachsen dieser Werkzeuge verlaufen parallel voneinander beabstandet und können somit gegensinnig angetrieben werden. Durch den Abstand zwischen den Achsen kann somit ein möglichst großer Bereich des zu verarbeitenden Rührguts abgedeckt werden, so dass eine homogene Masse nach relativ kurzer Zeit hergestellt werden kann. Um solch zufriedenstellende Ergebnisse benötigen diese Handrührgeräte jedoch zwei Werkzeuge, die durch relativ komplizierte Schnittstellen gesteuert werden müssen. Durch den Abstand zwischen den Rotationsachsen wirken die Handrührer ferner groß und sind manchmal schlecht handhabbar, falls beispielsweise die Verarbeitungsschüssel klein bemessen ist.

Darüber hinaus können sich bei der Bearbeitung in einer Schüssel Bereiche ausbilden, in denen das Rührgut unerwünscht lange ohne Bearbeitung verweilt. Dies kann zu einer

Beeinträchtigung der Homogenität oder zu der Notwendigkeit einer Verlängerung des Rührvorgangs führen.

### Der Erfindung zugrundeliegende Aufgabe

Der Erfindung liegt die Aufgabe zugrunde, ein Handküchengerät bereitzustellen, das eine schnelle und qualitative Verarbeitung des Rührguts gewährleistet.

### Erfindungsgemäße Lösung

Die der Erfindung zugrunde liegende Aufgabe wird durch ein Handküchengerät gemäß der Merkmalskombination des Anspruchs 1 gelöst.

Es wird ein Handküchengerät, insbesondere Stabmixer, mit einem Abtrieb und einer Koppelstelle für Werkzeug bereitgestellt. Vorzugsweise weist das erfindungsgemäße Handküchengerät zwei ineinandergreifende Werkzeuge, welche durch ein äußeres und ein inneres Werkzeug gebildet sind. Das innere Werkzeug wird im Betrieb von dem äußeren Werkzeug umlaufen, dergestalt dass eine Innenfläche des äußeren Werkzeugs an eine Außenfläche des inneren Werkzeugs vorbei geführt wird. Die zwei Werkzeuge werden mittels der Koppelstelle an den Abtrieb gekoppelt, so dass diese unterschiedlichen Antriebsarten ausgesetzt werden können. Insbesondere wird mindestens eines der Werkzeuge in Rotation versetzt, so dass Nahrungsmitteln verarbeitet werden können. Die ineinandergreifenden Werkzeuge erlauben eine schnelle und einfache Verarbeitung eines Mischguts. Die zwei ineinandergreifenden Werkzeuge bewirken eine homogene Konsistenz des Mischguts in der Arbeitsschüssel, in dem keine einzelne Bereiche entstehen können, in welchen das Mischgut unverarbeitet verbleibt. Das äußere Werkzeug befördert das Mischgut zum inneren Werkzeug, welches wiederum eine Sogwirkung auf das zu verarbeitende Nahrungsmittel ausübt. Somit entsteht ein kontinuierlicher Prozess, der ständig Mischgut in den Wirkbereich der zwei Werkzeuge ableitet.

Zwischen Antrieb und Werkzeuge ist ein Planetengetriebe mit einem ersten Antriebsrad für das innere Werkzeug und einem zweiten Antriebsrad für das äußere Werkzeug, angeordnet. Somit kann das Drehmoment des Antriebmotors des Handküchengeräts auf das Werkzeugsystem übertragen werden.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Es ist bevorzugt, dass das äußere Werkzeug und das innere Werkzeug jeweils als Schneebesen und/oder Kenthaken ausgebildet sind. Der Schneebesen umfasst zwei Werkzeuge, nämlich ein inneres und ein äußeres Werkzeug, welche ineinandergreifend rotierend angetrieben werden. Durch die Rotation definiert das innere Werkzeug eine Außenfläche, die im Betrieb an der Innenfläche des äußeren Werkzeugs verläuft. Üblicherweise sind die als Schneebesen ausgebildeten Werkzeuge strebenartig geformt, wobei die Strebe im Wesentlichen parallel zur Rotationsachse verlaufen. Durch die relativ schnelle Rotation der Strebe wird somit ein Bearbeitungsbereich des Mischguts definiert, der entsprechend der Rotationssymmetrie gegenüber der Rotationsachse den oben erwähnten Flächen entspricht. Diese Flächen sind als Modell, die in Rotation befindlichen Strebe des Schneebesens anzusehen. Der so ausgebildete Schneebesen erlaubt eine schnelle und effiziente Verarbeitung eines Nahrungsmittels, beispielsweise Sahne oder Eiweiß. Im Gegensatz zu einem Schneebesen sind die ineinandergreifenden Werkzeuge eines Knethakens hakenförmig ausgebildet, und werden üblicherweise eine langsamere Rotationsgeschwindigkeit erfahren. Die Werkzeuge eines Knethakens können gegenläufig angetrieben werden, so dass die bei der Verarbeitung von zähem Mischgut (Teig) entstehenden Drehmomente sich gegenseitig kompensieren. So muss ein Benutzer eine nicht so hohe Kraft auf das Handküchengerät ausüben, um dieses während der Verarbeitung zu stabilisieren.

Vorteilhafterweise umfassen die als Schneebesen ausgebildete Werkzeuge Streben, wobei die Streben jeweils gegen die Laufrichtung weisend, insbesondere im Abstand von je 120°, verbunden ausgebildet sind, wobei vorzugsweise drei Streben vorgesehen sind. Das innere und das äußere Werkzeug des Schneebesens weisen somit jeweils drei Streben auf, welche in einem gemeinsamen Punkt miteinander verbunden sind. Der jeweilige Punkt liegt auf der Rotationsachse des Werkzeugs und die drei Streben des inneren und des äußeren Werkzeugs verlaufen in einem 120° Winkel aus dem gemeinsamen Punkt heraus. So entsteht eine Rotationssymmetrie, welche eine effektive Verarbeitung des Mischguts erlaubt.

Bevorzugt ist, dass durch das Planetengetriebe und die zwei Antriebsräder für das innere bzw. äußere Werkzeug unterschiedliche Antriebsarten eingestellt werden können. Beispielsweise können die Werkzeuge gegenläufig um eine gemeinsame Rotationsachse rotierend angetrieben werden.

Es ist bevorzugt, dass das äußere und das innere Werkzeug einzeln betreibbar so, vorzugsweise so, dass auch kleine Arbeitsbehältnisse verwendbar sind. So kann beispielsweise nur das innere Werkzeug in die Koppelstelle des Handküchengeräts eingesetzt werden, und einzeln zur Nahrungsmittelverarbeitung verwendet werden. Das innere Werkzeug weist bevorzugt eine geeignete Abmessung und Form, um beispielsweise Nahrungsmittel innerhalb schmaler Rührschüsseln oder Gläsern zu verarbeiten.

Gemäß einer Ausführungsform ist das innere Werkzeug gegenläufig zum äußeren Werkzeug antreibar. Somit kann das zu verarbeitende Fluid (Rührgut) besonders homogen verarbeitet werden. Durch den gegenläufigen Lauf der Werkzeuge kann ferner das Drehmoment kompensiert werden, und ein Benutzer benötigt eine geringere Haltekraft bei der Handhabe des Handküchegeräts. Die durch die gegenläufig rotierenden Werkzeuge entstandenen Drehmomente heben sich nun fast vollständig auf; welches zu einem sicheren Betrieb des Handküchengeräts führt.

Gemäß einer weitern Ausführungsform der vorliegenden Erfindung ist von äußerem und innerem Werkzeug das eine starr und das andere Werkzeug rotierbar ausgebildet, wobei einem vorzugsweise starren äußerem Werkzeug eine Berührschutzfunktion für einen Benutzer und/oder insbesondere der Innenwand eines Arbeitsbehältnis zukommt. Das innere Werkzeug rotiert innerhalb des äußeren Werkzeugs, welches in diesem Fall gestoppt ist, und folglich eine Schutzfunktion aufweist.

Zweckmäßigerweise weist die Koppelstelle eine Magnethalterung für einen metallischen Werkzeugschaft auf. Folglich kann das Werkzeug in der Koppelstelle zumindest justiert werden, wobei anschließend ein Festziehen bzw. Fixieren erfolgen sollte. Es ist jedoch ebenfalls denkbar, dass die Magnethalterung das Werkzeug in der Koppelstelle in einer Endlage festhält und betriebsfähig bereitstellt.

Weiter ist die Magnethalterung weiter ausgebildet ist, um den Werkzeugschaft in die Koppelstelle des Handküchengeräts zu arretieren. Mittels der Magnethalterung wird nun das Werkzeug in eine korrekte Position gebracht, so dass ein Benutzer nur noch das festziehen des Werkzeugs durchführen muss.

Gemäß einer weiteren Ausführungsform der Erfindung sind die Werkzeuge flexibel ausgebildet, dergestalt dass diese beim Ankoppeln in die Koppelstelle des Handküchengeräts eine betriebsfähige Verwendungsform aufweisen. Das hat den Vorteil, dass die Werkzeuge platzsparend gelagert werden können, da sie durch die Flexibilität beispielsweise eine flache Form aufweisen können bzw. leicht gefaltet werden können.

Zweckmäßigerweise ist oberhalb eines ersten Gehäuseabschnitts ein zweiter, als Griffstück ausgebildeter, Gehäuseabschnitt vorgesehen.

Der als Griffstück ausgebildete Gehäuseabschnitt weist wenigstens abschnittsweise eine gut umfassbare Querschnittsverjüngung auf. Dies verbessert die Handhabe des Handküchengeräts und kann optisch ansprechend wirken.

Endseitig des Griffabschnitts ist ein Anschlag ausgebildet, welcher vorzugsweise mit dem Gehäusequerschnitt des ersten Gehäuseabschnitts korrespondiert und vorzugsweise wenigstens abschnittsweise eine Abstellfläche für das Handküchengerät bereitstellt. Somit kann das Handküchengerät in seiner zweiten Betriebsstellung auf eine Arbeitsfläche stabil abgestellt werden.

Es ist bevorzugt, dass in einer ersten Betriebsstellung der erste und zweite Gehäuseabschnitt eine gemeinsame Längsachse bilden.

Zweckmäßigerweise ist die Querschnittsverjüngung nur auf einer Seite der Längsachse, insbesondere um 30% gegenüber dem Außenquerschnitt verjüngend, ausgebildet. Folglich kann der Griff des Handküchengeräts sicher von einem Benutzer festgehalten werden.

Zum Zwecke der Verschwenkbarkeit von erstem und zweitem Gehäuseabschnitt ist zwischen diesen ein Gelenk ausgebildet, welches vorzugsweise in Gestalt einer Bajonettverbindung ausgebildet und vorzugsweise unter einem Winkel von 50° zur Horizontalen beziehungsweise unter 40° zur Längsachse des eines in senkrechter Arbeitsposition verwendeten Handküchengeräts angeordnet ist. Das Gelenk sichert eine einfache Handhabe und beide Betriebsstellungen können ohne hohen Kraftaufwand für den Benutzer eingestellt werden.

In der verschwenkten Position der Gehäuseabschnitte ist der zweite Gehäuseabschnitt (12) um 80° zum ersten Gehäuseabschnitt (11) verschwenkt und nimmt somit eine zweite Betriebsposition (II) ein. Diese Winkelstellung hat sich als ergonomisch vorteilhaft herausgestellt. Falls das Handküchengerät in dieser Position auf seine Abstellfläche abgestellt worden ist, kann folglich das Gewicht des Werkzeugs kompensiert werden und das Gerät kann somit nicht umfallen.

Die oben offenbarten Merkmale können sowohl einzeln als auch in beliebiger Kombination für die Verwirklichung der Erfindung in ihren verschiedenen Ausgestaltungen von Bedeutung sein.

### Kurzbeschreibung der Figuren

Die Erfindung wird im Folgenden anhand schematischer Zeichnungen an mehreren Ausführungsbeispielen mit weiteren Einzelheiten näher erläutert.

Es zeigen:
- Fig. 1a:: eine seitliche Ansicht eines Handküchengeräts gemäß der vorliegenden Erfindung in einer ersten Betriebsstellung;
- Fig. 1b:: eine seitliche Ansicht eines Handküchengeräts gemäß der vorliegenden Erfindung in einer zweiten Betriebsstellung;
- Fig. 1c:: ein Handküchengerät gemäß vorliegender Erfindung ohne Werkzeug;
- Fig. 2:: ein Werkzeugsystem gemäß vorliegender Erfindung;
- Fig. 3:: die prinzipielle Arbeitsweise des Werkzeugs gemäß vorliegender Erfindung;
- Fig. 4:: eine prinzipielle Ansicht der Koppelstelle des Abtriebs gemäß vorliegender Erfindung;
- Fig. 5:: die prinzipielle Vorgehensweise bei einer Inbetriebnahme des Handküchengeräts gemäß der vorliegenden Erfindung in einer zweiten Betriebsstellung;
- Fig. 6:: der Motor und das Getriebe des Handküchengeräts in einer schematischen Ansicht;
- Fig. 7:: das Handküchengerät gemäß der Erfindung mit einem Knethaken als Werkzeugsystem gemäß einer Ausführungsform der Erfindung;
- Fig. 8:: das Einstellen der ersten und zweiten Betriebsstellung des Handküchengeräts;
- Fig. 9: die Bajonettverbindung im Gelenk des Handküchengeräts; und schließlich
- Fig. 10: ein weiteres Werkzeug gemäß der vorliegenden Erfindung.

### Ausführliche Beschreibung der Erfindung anhand mehrerer Ausführungsbeispiele

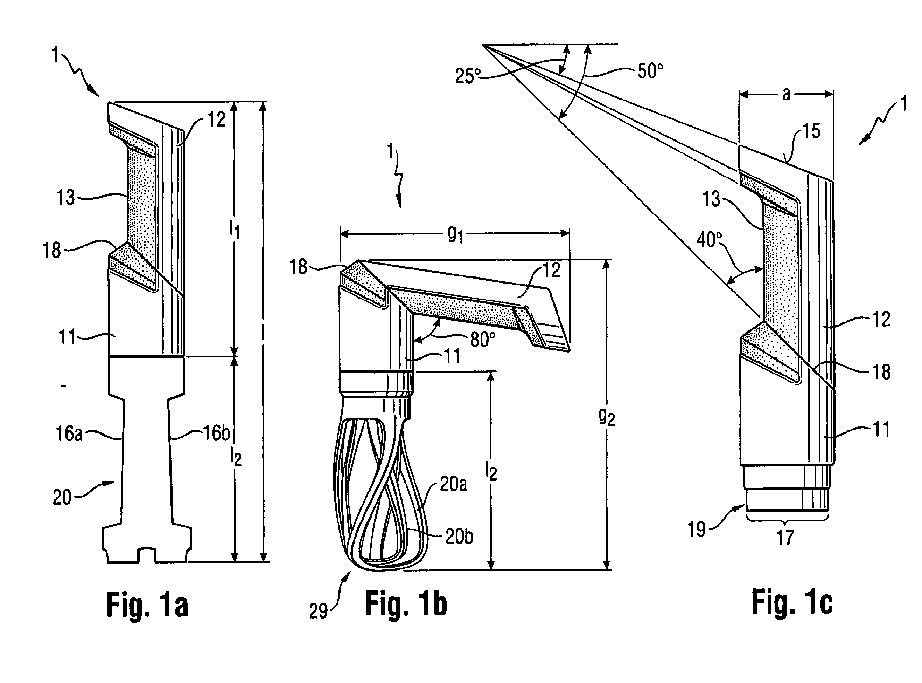

Fig. 1a zeigt das Handküchengerät in einer ersten Betriebsstellung, in welcher die Längsachse des ersten Gehäuseabschnitts 11 und die Längsachse des zweiten Gehäuseabschnitts 12 übereinstimmen, in dem diese eine gemeinsame Längsachse bilden. In dieser Stellung weist das Handküchengerät 1 die Form eines Stabmixers und kann als solches in Betrieb genommen werden.

Am unteren Ende des Handküchengeräts 1 ist ein Werkzeug 20 angeordnet, welches zur Nahrungsmittelverarbeitung eingesetzt werden kann. Das Werkzeug 20 in der Fig. 1a ist schematisch dargestellt und weist gemäß einer Ausführungsform einen zylindrischen Verlauf mit zwei seitlich angeordneten Öffnungen 16a und 16b, die sich entlang der Werkzeugachse erstrecken. Die Öffnungen 16a, 16b sind im Hauptkörper des Werkzeugs 20 angeformt und sind ausgebildet, um das bereits verarbeitete Mischgut zurück in die Arbeitsschüssel zu befördern. Im unteren Bereich des Werkzeugs 20 kann gemäß einer möglichen Ausführungsform ein Messer oder eine Schlagscheibe angeordnet werden, welche das Mischgut bearbeiten und entsprechend durch die Öffnungen 16a, 16b wieder aus dem Wirkbereich des Werkzeugs hinausbefördern. Anschließend kann das Mischgut erneut in den Wirkbereich des Werkzeugs 20 geführt werden, bzw. ein Benutzer kann das Handküchengerät 1 dahin bewegen.

Das Handküchengerät 1 gemäß einer möglichen Ausführungsform der Erfindung ist als Akkugerät ausgebildet und kann ferner eine Ladestation aufweisen, mit welcher die Akkumulatoren erneut aufgeladen werden können. Üblicherweise werden die Akkumulatoren im Griffbereich 12 angeordnet und werden funktionell mit dem Elektromotor, der sich im ersten Gehäuseabschnitt 11 befindet. Dazu kann das Gerät eine Gesamtlänge I von ca. 240 mm betragen, welche einen Gehäusebereich der Länge l1 gleich ca. 200 mm und einen Werkzeugbereich Länge l2 gleich ca. 200 mm aufweist. Diese Längenangaben entsprechen einer möglichen Ausführungsform und haben sich als vorteilhaft in der Handhabe bewährt.

Ein Benutzer kann folglich das Handküchengerät im Griffbereich 12 insbesondere an der Querschnittsverjungung 13 fassen, und dieses entsprechend bei der Nahrungsmittelbearbeitung verwenden. Die Querschnittsverjungung 13 ist so dimensioniert, dass ein Benutzer den Griffbereich 12 bequem handhaben kann. Weiter kann die Querschnittsverjungung 13 eine speziell ausgebildete Oberfläche aufweisen, die einen sicheren Betrieb des Handküchengeräts gewährleisten kann.

Fig. 1b zeigt das Handküchengerät 1 mit einem Werkzeug bzw. Werkzeugsystem 20 gemäß vorliegender Erfindung in einer zweiten Betriebsposition ll, in welcher das Handküchengerät 1 der Handhabung eines Handrührers entspricht. Das Werkzeugsystem 20 bzw. das Werkzeug 20 übernimmt nun die Aufgabe eines Schneebesens 29, der beispielsweise zum Schlagen von Sahne oder Eiweiß einsetzbar ist. Das Werkzeug 20 weist zwei Werkzeugteile auf, ein äußeres Werkzeug 20a und ein inneres Werkzeug 20b. Gemäß einer möglichen Ausführungsform der Erfindung werden das innere Werkzeug 20b und das äußere Werkzeug 20a gegensinnig angetrieben, d.h. beispielsweise rotiert das äußere Werkzeug 20a im Uhrzeigersinn und entsprechend würde das innere Werkzeug 20b gegen den Uhrzeigersinn angetrieben werden.

Das Verschwenken bzw. das Verdrehen der Gehäuseabschnitte 11 und 12 wird mittels eines geeigneten Gelenks 18 bereitgestellt, so dass in der zweiten Betriebsstellung 2 ein Winkel von ca. 80° zwischen den Gehäuseabschnitten 11, 12 bei der Verwendung des Handküchengeräts als Handrührer eingestellt worden ist. Dieser Winkel hat sich als besonders ergonomisch in der Handhabe des Geräts 1 herausgestellt. Weiter weist der Griffabschnitt 12 eine Gesamtlänge g1 von ca. 190 mm auf, und die Höhe g2 des Abschnitts 11 samt Werkzeug beträgt ca. 200 mm. Diese Abmessungen haben sich ebenfalls als ergonomisch und leicht handhabbar herausgestellt.

In der Fig. 1c ist der Hauptkörper des Handküchengeräts ohne angeschlossenes Werkzeug in einer ersten Betriebsstellung l in Form eines Stabmixers. Der Griffabschnitt 12 des Gerätegehäuses weist weiter eine Ablagefläche 15 auf, welche zur Ablage des Handküchegeräts in der zweiten Betriebsstellung (Fig. 1b) dienen kann. So kann ein Benutzer das Handküchengerät stabil auf eine Arbeitsfläche abstellen, um beispielsweise andere Aufgaben zu erledigen.

Zum Zwecke der Verschwenkbarkeit von erstem und zweitem Gehäuseabschnitt 11 und 12 ist das Gelenk 18 unter einem Winkel von 50° zur Horizontalen beziehungsweise unter 40° zur Längsachse des in senkrechter Arbeitsposition verwendeten Handküchengeräts 1 angeordnet. Somit kann die Querschnittsverjüngung 13 des Griffabschnittes 12 besonders ergonomisch ausgebildet werden. Die Querschnittsverjüngung 13 ist in einer Ausführungsform nur auf einer Seite der Längsachse, insbesondere um 30% gegenüber dem Außenquerschnitt verjüngend, ausgebildet. Der Außenquerschnitt wird durch den ersten Gehäuseabschnitt 11 definiert, in welchem üblicherweise der Antriebsmotor und das Getriebe des Handküchengeräts 1 angeordnet sind.

Im unteren Bereich des Hauptkörpers des Handküchengeräts sind der Abtrieb 19 und die Koppelstelle 17 für das einzusetzende Werkzeug 20 angeordnet. Der Abtrieb 19 kann zwei gegenläufige Abtriebe, welche wiederum zum Antreiben des inneren und des äußeren Werkzeugs verwendbar sind.

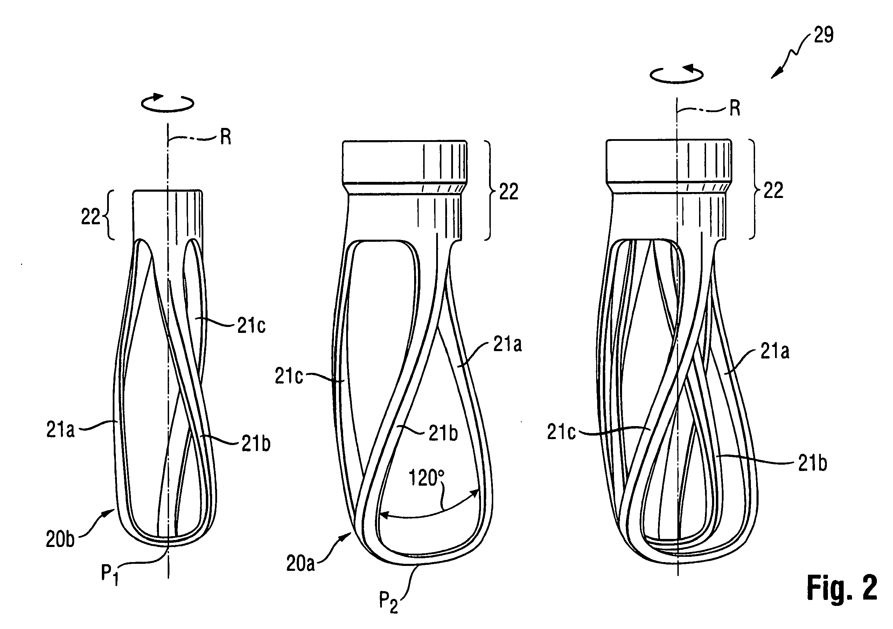

Fig. 2 zeigt ein als Schneebesen 29 ausgebildetes Werkzeug 20 gemäß vorliegender Erfindung. Das Werkzeug 20 weist ein inneres Werkzeug 20b und ein äußeres Werkzeug 20a auf. Das innere Werkzeug und das äußere Werkzeug werden rotierend angetrieben, wobei sich das innere Werkzeug 20b innerhalb des äußeren Werkzeugs 20a dreht. Bevorzugt werden die Werkzeuge 20a, 20b gegenläufig angetrieben, um somit eine Drehmomentkompensation zu erreichen und weiter die Homogenität des zu verarbeitenden Nahrungsmittels zu verbessern.

Beide Rührwerkzeuge 20a und 20b werden jeweils mit drei Streben 21a, 21b, 21c aufgebaut, welche jeweils einen gemeinsamen Punkt P1 bzw. P2 auf der Rotationsachse R aufweisen. Die drei Streben für das innere Werkzeug 20b und weiter die drei Streben für das äußere Werkzeug 20a stellen ein Optimum an Laufruhe und eine schlichte Optik für einen Betrachter sicher. Weiter ist die Reinigung durch die relativ kleine Anzahl an Einheiten besonders einfach. Die Streben 21 a, 21 b, 21 c des äußeren und inneren Werkzeugs 20a, 20b sind jeweils um 120° gegen die Laufrichtung verwunden. Auf diese Weise gleiten die Streben von innerem und äußerem Werkzeug ohne Belastungsspitzen aneinander vorbei und gleichzeitig wird dadurch die Drehbewegung bzw. Rotation optisch verdeutlicht. In der Fig. 2 sind ist schematisch die bevorzugte Rotationsrichtung des inneren bzw. äußeren Werkzeugs gezeigt.

Im oberen Bereich weisen beide Werkzeuge 20a und 20b einen Werkzeugschaft 22 auf, der eine Wirkverbindung zwischen Abtrieb und Werkzeug bereitstellt. Gemäß dieser Ausführungsform der Erfindung haben die Streben einen dreieckigen Querschnitt und sind integral mit dem Schaft ausgebildet.

Der Schaft 33 des äußeren Werkzeugs 20a ist entlang des unterer Gehäuseabschnitts 11 des Handküchengeräts 1 hochgezogen, welches eine zusätzliche Schutzfunktion gegenüber Verunreinigungen der Koppelstelle am Handküchengerät 1 bereitstellt.

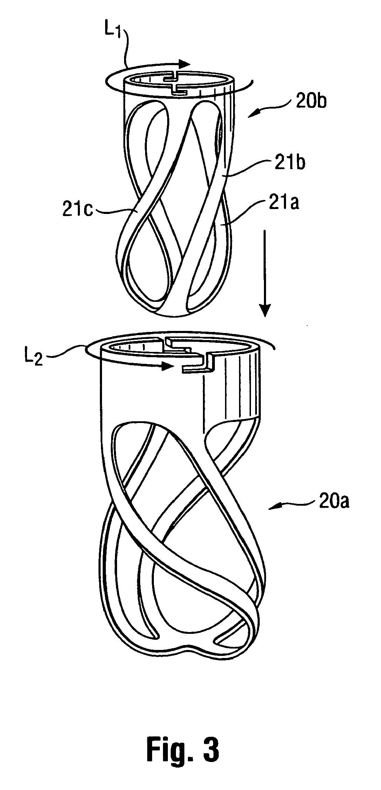

Fig. 3 zeigt das Werkzeugsystem aus Fig. 2 währen des Zusammenbauens. Das innere Werkzeug 20b kann in das äußere Werkzeug 20a eingesetzt werden, so dass diese möglichst platzsparend gegenläufig rotieren können. Die Rotationsrichtung ist mit den Bezugszeichen L1 bzw. L2 dargestellt. Weiter weisen die Werkzeuge aus Fig. 3 jeweils vier Streben auf.

Das Mischgut bzw. Rührgut sollte in einer bestimmten Höhe am Werkzeug "abgerissen" werden, da es sich sonst am Werkzeug 20 entlang bis zur Antriebseinheit 60, 17, 16 hochziehen kann, was zu Verschmutzung Funktionsbeeinträchtigung des Gerätes 1 führt.

Durch schräges aneinander Vorbeigleiten der Werkzeuge 20a und 20b kann somit das oben erwähnte Abreißen erreicht werden. Gleichzeitig mindert dies auch den unruhigen Lauf am Schüsselrand. Die ineinandergreifenden Werkzeuge 20a und 20b stellen sicher, dass das Rührgut durch das Werkzeug 20 hindurchgeführt wird und sich nicht im Werkzeug 20 sammelt.

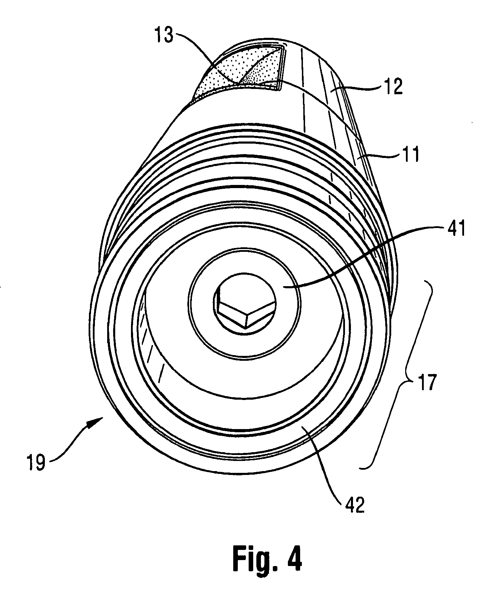

Fig. 4 zeigt schematisch den Abtrieb des Handküchengeräts gemäß vorliegender Erfindung. Der Abtrieb 19 steht in Wirkverbindung mit dem Antriebsmotor 60 des Handküchengeräts und weist eine Koppelstelle 17 für ineinandergreifende Werkzeuge 20 auf. Die Koppelstelle 17 umfasst zwei Abtriebsbereiche 41 und 42 für das innere bzw. das äußere Werkzeug 20b und 20a Die Abtriebsbereiche 41 und 42 sind konzentrisch ausgebildet und sind eingerichtet um mit dem jeweiligen Werkzeugschaft 22 des inneren bzw. äußeren Werkzeugs zu arbeiten. Die Abtriebsbereiche 41 und 42 sind lediglich prinzipiell dargestellt und können auch eine andere Ausgestaltung aufweisen.

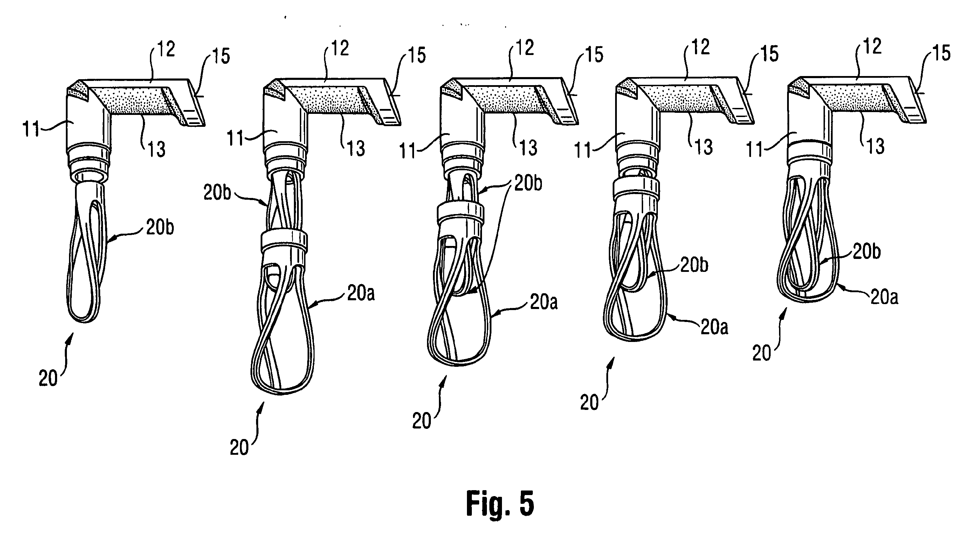

Fig. 5 zeigt das erfindungsgemäße Handküchengerät 1 in einer zweiten Betriebsstellung als Handrührer, wobei im ersten Bild nur das innere Werkzeug 20b verwendet wird und in den nachfolgenden Sequenzen das Aufsetzen des äußeren Werkzeugs 20a angedeutet wird. Im letzten Bild wird somit das erfindungsgemäße Handküchengerät 1 in Form eines Handrührer mit zwei ineinandergreifenden Werkzeugen 20a, 20b, die eine schnelle und effektive Bearbeitung von Mischgut sichern.

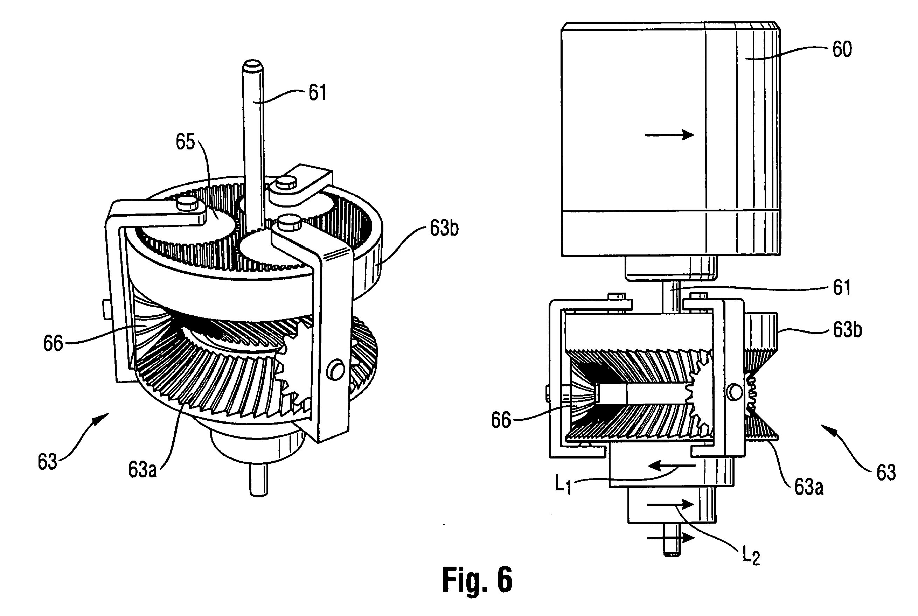

Fig. 6 zeigt schematisch das Antriebsgetriebe des erfindungsgemäßen Handküchengeräts gemäß einer ersten Ausführungsform. Weitere Antriebsgetriebe können eingesetzt werden, die geeignet sind, um das innere und äußere Werkzeug rotierend anzutreiben.

Das Getriebe ist als Planetengetriebe 63 ausgebildet und weist ein erstes Antriebsrad 63a für das äußere Werkzeug 20a und weiter ein zweites Antriebsrad 63b für das innere Werkzeug 20b. Die Drehmomentübertragung wird mit Hilfe geeigneter Sonnenräder 65, welche die Rotation der Motorachse 61 entsprechend umwandeln und übertragen. Das Planetengetriebe transformiert die Drehzahl des Motors 60 in den für den Rührvorgang benötigten Drehzahlbereich um das etwa dreißigfache nach unten. Die Kegelräder 66 dienen dazu, die Drehrichtung für das äußere Rührwerkzeug umzukehren. Für leiseren und belastungsarmen Betrieb werden bevorzugt schrägverzahnte Zahnräder eingesetzt.

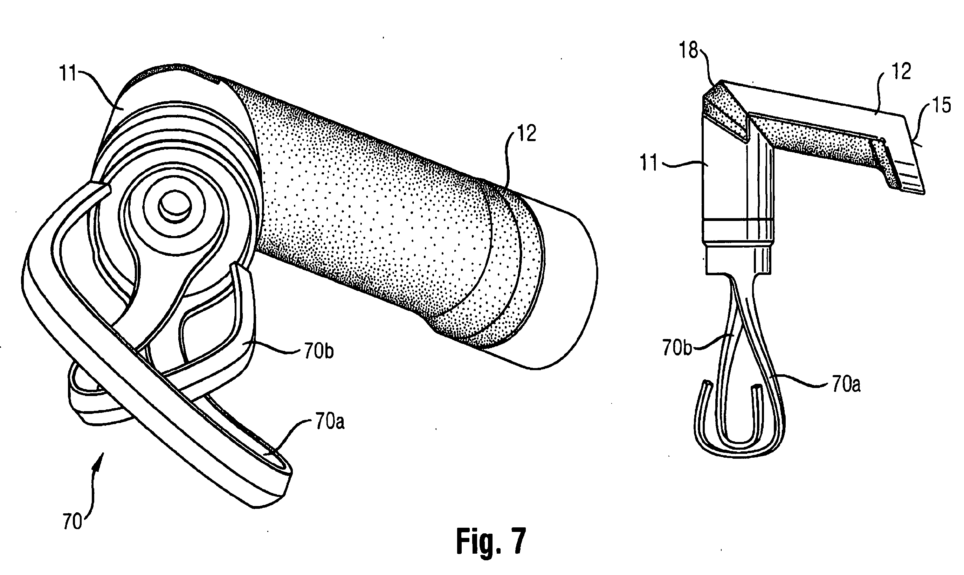

Fig. 7 zeigt ein Handküchengerät mit aufgesetztem Knetwerkzeug gemäß der Erfindung. Das Knetwerkzeug ist als Knethaken 70 ausgebildet und weist ebenfalls zwei ineinandergreifende Werkzeuge 70a und 70b auf. Die hakenförmig ausgebildeten Werkzeuge 70a und 70b werden analog gegenläufig angetrieben, und können somit das entstandene Drehmoment kompensieren. Im rechten Bild ist eine Seitenansicht der Knethaken gezeigt. Das Knethakensystem 70 wird wie der Schneebesen 20 ebenfalls an der Koppelstelle 17 des Handküchengeräts 1 mit dem Getriebe des Antreibsmotors 60 verbunden.

Falls das Handküchengerät für eine Knetfunktion eingesetzt wird, ist es vorteilhaft, dass sich die Gehäuseabschnitte 11 und 12 in der zweiten Betriebsstellung ll verschwenkt sind. In dieser Position können die Drehmomente, die bei der Teigverarbeitung entstehen, durch den besseren Hebel ausgeglichen werden.

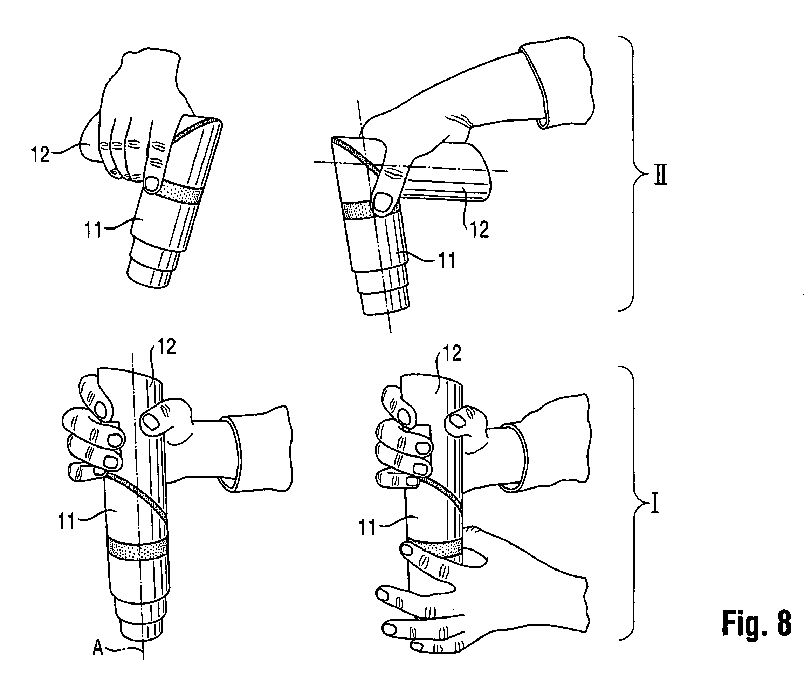

Fig. 8 zeigt schematisch das Verschwenken des Handküchengeräts aus einer zweiten Betriebsposition ll als Handrührer in eine erste Betriebsposition als Stabmixer. Wie gezeigt benötigt der Benutzer kann zusätzliches Werkzeug, sondern kann leicht die Drehung vornehmen. Es wäre denkbar, dass das Handküchengerät 1 auch in einer Zwischenstellung betrieben werden könnte. Gemäß dieser Ausführungsform kann jedoch das Handküchengerät lediglich in einer ersten und einer zweiten Position betrieben werden.

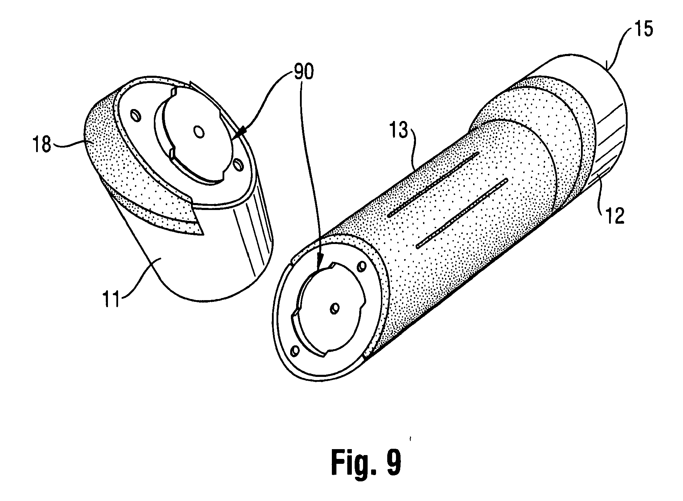

Fig. 9 zeigt das Gelenk des Handküchengeräts 1. Das Gelenk 18 ist bevorzugt mit einer Bajonettverbindung 90 versehen, so dass beide Gehäuseabschnitte voneinander getrennt werden können. Dies erleichtert die Reinigung.

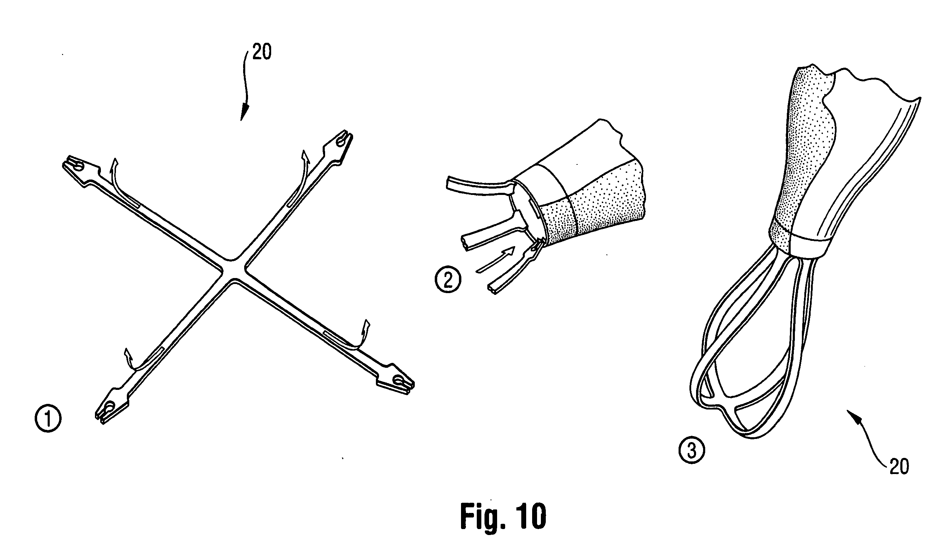

Fig. 10 zeigt ein flexibles Werkzeug 20 gemäß vorliegender Erfindung. Das Werkzeug 20 weist im Normalzustand eine flache Bauweise auf und kann folglich platzsparend gelagert werden. Im aufgesteckten Zustand, d.h. in der Koppelstelle 17 des Handküchengeräts 1 nimmt das Werkzeug 20 die Endform auf, und kann anschließend zur Nahrungsmittelverarbeitung eingesetzt werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichen

- 1: Handküchengerät
- 11: erster Gehäuseabschnitt
- 12: zweiter Gehäuseabschnitt bzw. Griffabschnitt
- 13: Querschnittsverjüngung
- 15: Abstellfläche
- 17: Koppelstelle
- 18: Gelenk
- 19: Abtrieb
- 20: Werkzeug
- 20a: inneres Werkzeug
- 20b: äußeres Werkzeug
- 21a, 21b, 21c: Streben des Werkzeugs bzw. Werkzeuge
- 22: Werkzeugschaft
- 29: Schneebesen
- 60: Motor bzw. Antriebsmotor des Handküchengeräts
- 61: Motorachse
- 63: Planetengetriebe
- 63a: erstes Antriebsrad für das äußere Werkzeug
- 63b: zweites Antriebsrad für das innere Werkzeug
- 70: Knethaken
- 90: Bajonettverbindung
- I: erste Betriebsstellung bzw. Betriebsposition
- II: zweite Betriebsstellung bzw. Betriebsposition
- L1: Laufrichtung des inneren Werkzeugs
- L2: Laufrichtung des äußeren Werkzeugs

## Patentansprüche

1. Handküchengerät (1), insbesondere Stabmixer, bei dem ein Abtrieb (19) des Handküchengeräts (1) mit einer Koppelstelle (17) für zwei ineinandergreifende, Werkzeuge (20, 20a, 20b) verbindbar ist, wobei die ineinandergreifenden Werkzeuge (20, 20a, 20b) durch ein äußeres Werkzeug (20a) und ein innerhalb des äußeren Werkzeugs (20a) angeordnetes inneres Werkzeug (20b) ausgebildet sind, **dadurch gekennzeichnet, dass** zwischen Antrieb und Werkzeuge (20, 20a, 20b) ein Planetengetriebe (63) mit einem ersten Antriebsrad (63b) für das innere Werkzeug (20b) und einem zweiten Antriebsrad (63a) für das äußere Werkzeug (20a) angeordnet ist.

2. Handküchengerät nach Anspruch 1, **dadurch gekennzeichnet, dass** das äußere Werkzeug (20a) und das innere Werkzeug (20b) jeweils als Schneebesen (29) und/oder Kenthaken (70) ausgebildet sind.

3. Handküchengerät nach Anspruch 1 oder 2, **dadurch gekennzeichnet, dass** die Werkzeuge (20, 20a, 20b) Streben (21a, 21b, 21c) aufweisen, wobei die Streben (21a, 21b, 21c) mindestens eines als Schneebesen (29) ausgebildetes Werkzeug (20, 20a, 20b) jeweils gegen die Laufrichtung (L1, L2) weisend, insbesondere im Abstand von je 120°, verbunden ausgebildet sind, wobei vorzugsweise drei Streben (21a, 21b, 21 c) vorgesehen sind.

4. Handküchengerät (1) nach einem der vorhergehenden Ansprüche, **dadurch gekennzeichnet, dass** das äußere und das innere Werkzeug (20a, 20b) einzeln betreibbar ist, vorzugsweise so, dass auch kleine Arbeitsbehältnisse verwendbar sind.

5. Handküchengerät (1) nach einem der vorhergehenden Ansprüche, **dadurch gekennzeichnet, dass** das innere Werkzeug (20b) gegenläufig zum äußeren Werkzeug (20a) antreibar ist.

6. Handküchengerät (1) nach einem der vorhergehenden Ansprüche, **dadurch gekennzeichnet, dass** von äußerem und innerem Werkzeug (20a, 20b) das eine starr und das andere Werkzeug rotierbar ausgebildet ist, wobei einem vorzugsweise starren äußerem Werkzeug (20a) eine Berührschutzfunktion für einen Benutzer und/oder insbesondere der Innenwand eines Arbeitsbehältnis zukommt.

7. Handküchengerät (1) nach einem der vorhergehenden Ansprüche, **dadurch gekennzeichnet, dass** die Koppelstelle (17) mit einer Magnetkupplung für einen metallischen Werkzeugschaft (22) ausgebildet ist.

8. Handküchengerät (1) nach Anspruch 7, **dadurch gekennzeichnet, dass** die Magnetkupplung weiter ausgebildet ist, um den Werkzeugschaft (22) in die Koppelstelle (17) des Handküchengeräts (1) zu arretieren.

9. Handküchengerät (1) nach einem der vorhergehenden Ansprüche, **dadurch gekennzeichnet, dass** die Werkzeuge flexibel ausgebildet sind, dergestalt dass diese beim Ankoppeln in die Koppelstelle (17) des Handküchengeräts (1) eine betriebsfähige Verwendungsform aufweisen.

10. Handküchengerät (1) nach einem der vorhergehenden Ansprüche, **dadurch gekennzeichnet, dass** das innere und/oder das äußere Werkzeug (20a, 20b) hakenförmig ausgebildet sind, um eine Knetfunktion des Handküchengeräts (1) bereitzustellen.

11. Handküchengerät (1) nach einem der vorhergehenden Ansprüche, dass das Handküchengerät (1) einen Motor (60) umfasst, an dessen Motorachse (61) der Abtrieb (19) ausgebildet ist.

12. Handküchengerät (1) nach einem der vorhergehenden Ansprüche, **dadurch gekennzeichnet, dass** der Motor (60) in einem ersten Gehäuseabschnitt (11) angeordnet ist.

13. Handküchengerät (1) nach einem der vorhergehenden Ansprüche, **dadurch gekennzeichnet, dass** oberhalb des ersten Gehäuseabschnitts (11) ein zweiter, als Griffstück (12) ausgebildeter, Gehäuseabschnitt vorgesehen ist.

14. Handküchengerät (1) nach einem der vorhergehenden Ansprüche, **dadurch gekennzeichnet, dass** der als Griffstück ausgebildete Gehäuseabschnitt (12) wenigstens abschnittsweise eine gut umfaßbare Querschnittsverjüngung (13) aufweist.

15. Handküchengerät (1) nach einem der vorhergehenden Ansprüche, **dadurch gekennzeichnet, dass** endseitig des Griffabschnitts (12) ein Anschlag ausgebildet ist, welcher vorzugsweise mit dem Gehäusequerschnitt des ersten Gehäuseabschnitts (11) korrespondiert und vorzugsweise wenigstens abschnittsweise eine Abstellfläche (15) für das Handküchengerät (1) bereitstellt.

16. Handküchengerät (1) nach einem der vorhergehenden Ansprüche, **dadurch gekennzeichnet, dass** in einer ersten Betriebsstellung (I) der erste und zweite Gehäuseabschnitt (11, 12) eine gemeinsame Längsachse bilden.

17. Handküchengerät (1) nach einem der vorhergehenden Ansprüche, **dadurch gekennzeichnet, dass** die Querschnittsverjüngung (13) nur auf einer Seite der Längsachse, insbesondere um 30% gegenüber dem Außenquerschnitt verjüngend, ausgebildet ist.

18. Handküchengerät (1) nach einem der vorherigen Ansprüche, **dadurch gekennzeichnet, dass** zum Zwecke der Verschwenkbarkeit von erstem und zweitem Gehäuseabschnitt (11, 12) zwischen diesen ein Gelenk (18) ausgebildet ist, welches vorzugsweise in Gestalt einer Bajonettverbindung (90) ausgebildet und vorzugsweise unter einem Winkel von 50° zur Horizontalen beziehungsweise unter 40° zur Längsachse des eines in senkrechter Arbeitsposition verwendeten Handküchengeräts (1) angeordnet ist.

19. Handküchengerät (1) nach einem der vorhergehenden Ansprüche, **dadurch gekennzeichnet, dass** in der verschwenkten Position der Gehäuseabschnitte (11) der zweite Gehäuseabschnitt (12) um 80° zum ersten Gehäuseabschnitt (11) verschwenkt ist und eine zweite Betriebsposition (II) einnimmt.

20. Handküchengerät (1) nach einem der vorhergehenden Ansprüche, **dadurch gekennzeichnet, dass** die genannten Winkelmaße jeweils korrespondieren um +/- 10 °ausgebildet sind.

21. Handküchengerät (1) nach einem der vorherigen Ansprüche, **dadurch gekennzeichnet, dass** das Handküchengerät (1) sowohl in der ersten als auch in der zweiten Betriebsposition (I, II) betreibbar ist.

## Claims

1. Handheld kitchen appliance (1), particularly rod mixer, in which a drive output (19) of the handheld kitchen appliance (1) is connectible with a coupling point (17) for two interengaging tools (20, 20a, 20b), wherein the interengaging tools (20, 20a, 20b) are formed by an outer tool (20a) and an inner tool (20b) arranged within the outer tool (20a), **characterised in that** a planetary transmission (63) with a first drive wheel (63b) for the inner tool (20b) and a second drive wheel (63a) for the outer tool (20a) is arranged between the drive and the tools (20, 20a, 20b).

2. Handheld kitchen appliance according to claim 1, **characterised in that** the outer tool (20a) and the inner tool (20b) are respectively constructed as whisks (29) and/or kneading hooks (70).

3. Handheld kitchen appliance according to claim 1 or 2, **characterised in that** the tools (20, 20a, 20b) comprise struts (21 a, 21 b, 21c), wherein the struts (21 a, 21b, 21 c) of at least one tool (20, 20a, 20b) constructed as a whisk (29) are constructed to be connected to respectively face opposite the running direction (L1, L2), particularly at respective spacings of 120°, wherein preferably three struts (21 a, 21 b, 21 c) are provided.

4. Handheld kitchen appliance (1) according to any one of the preceding claims, **characterised in that** the outer and inner tools (20a, 20b) are individually operable preferably so that even small working containers are usable.

5. Handheld kitchen appliance (1) according to any one of the preceding claims, **characterised in that** the inner tool (20b) is driveable in opposite sense to the outer tool (20a).

6. Handheld kitchen appliance (1) according to any one of the preceding claims, **characterised in that** of the outer and inner tools (20a, 20b) one tool is constructed to be rigid and the other tool to be rotatable, wherein a preferably rigid outer tool (20a) has a contact protection function for a user and/or, in particular, the inner wall of a work container.

7. Handheld kitchen appliance (1) according to any one of the preceding claims, **characterised in that** the coupling point (17) is constructed with a magnet coupling for a metallic tool shank (22).

8. Handheld kitchen appliance (1) according to claim 7, **characterised in that** the magnet coupling is further constructed in order to lock the tool shank (22) in the coupling point (17) of the handheld kitchen appliance (1).

9. Handheld kitchen appliance (1) according to any one of the preceding claims, **characterised in that** the tools are of flexible construction in such a way that these have an operationally capable use shape when coupled to the coupling point (17) of the handheld kitchen appliance (1).

10. Handheld kitchen appliance (1) according to any one of the preceding claims, **characterised in that** the inner tool and/or outer tool (20a, 20b) is or are of hook-shaped construction in order to provide a kneading function of the handheld kitchen appliance (1).

11. Handheld kitchen appliance (1) according to any one of the preceding claims, **characterised in that** the handheld kitchen appliance (1) comprises a motor (60), at the motor axle (61) of which the drive output (19) is formed.

12. Handheld kitchen appliance (1) according to any one of the preceding claims, **characterised in that** the motor (60) is arranged in a first housing section (11).

13. Handheld kitchen appliance (1) according to any one of the preceding claims, **characterised in that** a second housing section, which is constructed as a handle (12), is provided above the first housing section (11).

14. Handheld kitchen appliance (1) according to any one of the preceding claims, **characterised in that** the housing section (12) constructed as a handle has at least in a section a cross-sectional narrowing (13) able to be readily gripped.

15. Handheld kitchen appliance (1) according to any one of the preceding claims, **characterised in that** formed at the end of the handle section (12) is an abutment which preferably corresponds with the housing cross-section of the first housing section (11) and preferably provides at least in a section a set-down surface (15) for the handheld kitchen appliance (1).

16. Handheld kitchen appliance (1) according to any one of the preceding claims, **characterised in that** the first and second housing sections (11, 12) form a common longitudinal axis in a first operational setting (I).

17. Handheld kitchen appliance (1) according to any one of the preceding claims, **characterised in that** the cross-sectional narrowing (13) is formed only on one side of the longitudinal axis, in particularly to narrow by 30% relative to the outer cross-section.

18. Handheld kitchen appliance (1) according to any one of the preceding claims, **characterised in that** for the purpose of pivotability of the first and second housing sections (11, 12) a joint (18) is formed therebetween, which is preferably constructed in the form of a bayonet coupling (90) and is preferably arranged at an angle of 50° to the horizontal or at 40° to the longitudinal axis of the handheld kitchen appliance (1) used in a vertical operating position.

19. Handheld kitchen appliance (1) according to any one of the preceding claims, **characterised in that** in the pivoted position of the housing sections (11) the second housing section (12) is pivoted through 80° relative to the first housing section (11) and adopts a second operating position (II).

20. Handheld kitchen appliance (1) according to any one of the preceding claims, **characterised in that** the said angular amounts are formed to respectively correspond by +/- 10°.

21. Handheld kitchen appliance (1) according to any one of the preceding claims, **characterised in that** the handheld kitchen appliance (1) is operable not only in the first operating position (I), but also in the second operation position (II).

## Revendications

1. Appareil de cuisine manuel (1), notamment mixeur sur pied, dans lequel un entraînement (19) de l'appareil de cuisine manuel (1) peut être raccordé à un point de couplage (17) pour deux outils (20, 20a, 20b) ayant prise l'un dans l'autre, les outils (20, 20a, 20b) ayant prise l'un dans l'autre étant formés par un outil extérieur (20a) et par un outil intérieur (20b) disposé à l'intérieur de l'outil extérieur (20a), **caractérisé en ce qu'**un engrenage planétaire (63) muni d'une première roue d'entraînement (63b) pour l'outil intérieur (20b) et d'une deuxième roue d'entraînement (63a) pour l'outil extérieur (20a) est disposé entre l'entraînement et les outils (20, 20a, 20b).

2. Appareil de cuisine manuel selon la revendication 1, **caractérisé en ce que** l'outil extérieur (20a) et l'outil intérieur (20b) sont respectivement réalisés en tant que fouet (29) et/ou crochet de pétrissage (70).

3. Appareil de cuisine manuel selon la revendication 1 ou 2, **caractérisé en ce que** les outils (20, 20a, 20b) présentent des branches (21 a, 21 b, 21 c), les branches (21 a, 21 b, 21c) au moins d'un outil (20, 20a, 20b) réalisé comme fouet (29) étant réalisées de manière reliée en étant dirigées respectivement en sens inverse du sens de marche (L1, L2), notamment avec écart de respectivement 120°, de préférence trois branches (21 a, 21 b, 21 c) étant ménagées.

4. Appareil de cuisine manuel (1) selon l'une quelconque des revendications précédentes, **caractérisé en ce que** l'outil extérieur et l'outil intérieur (20a, 20b) peuvent être mis en fonction individuellement, de préférence de sorte que des petits récipients de travail soient également utilisables.

5. Appareil de cuisine manuel (1) selon l'une quelconque des revendications précédentes, **caractérisé en ce que** l'outil intérieur (20b) peut être entraîné en sens inverse de l'outil extérieur (20a).

6. Appareil de cuisine manuel (1) selon l'une quelconque des revendications précédentes, **caractérisé en ce que** de l'outil extérieur et de l'outil intérieur (20a, 20b), l'un est réalisé de manière rigide et l'autre de manière rotative, une fonction de protection contre les contacts accidentels fournie pour un utilisateur étant attribuée de préférence à un outil rigide (20a) et/ou notamment à la paroi intérieure d'un récipient de travail.

7. Appareil de cuisine manuel (1) selon l'une quelconque des revendications précédentes, **caractérisé en ce que** le point de couplage (17) est réalisé à l'aide d'un accouplement magnétique pour une tige d'outil métallique (22).

8. Appareil de cuisine manuel (1) selon la revendication 7, **caractérisé en ce que** l'accouplement magnétique est en outre réalisé afin de bloquer la tige d'outil (22) dans le point de couplage (17) de l'appareil de cuisine manuel (1).

9. Appareil de cuisine manuel (1) selon l'une quelconque des revendications précédentes, **caractérisé en ce que** les outils sont réalisés de manière flexible, de façon à ce que ceux-ci présentent une forme d'utilisation apte à fonctionner lors du couplage dans le point de couplage (17) de l'appareil de cuisine manuel (1).

10. Appareil de cuisine manuel (1) selon l'une quelconque des revendications précédentes, **caractérisé en ce que** l'outil extérieur et/ou l'outil intérieur (20a, 20b) sont réalisés en forme de crochet afin de fournir une fonction de pétrissage de l'appareil de cuisine manuel (1).

11. Appareil de cuisine manuel (1) selon l'une quelconque des revendications précédentes, **caractérisé en ce que** l'appareil de cuisine manuel (1) comprend un moteur (60) sur l'axe (61) duquel est réalisé l'entraînement (19).

12. Appareil de cuisine manuel (1) selon l'une quelconque des revendications précédentes, **caractérisé en ce que** le moteur (60) est disposé dans une première section de boîtier (11).

13. Appareil de cuisine manuel (1) selon l'une quelconque des revendications précédentes, **caractérisé en ce qu'**une deuxième section de boîtier réalisée comme partie de prise (12) est ménagée au-dessus de la première section de boîtier (11).

14. Appareil de cuisine manuel (1) selon l'une quelconque des revendications précédentes, **caractérisé en ce que** la section de boîtier (12) réalisée comme partie de prise présente au moins en partie un rétrécissement de section transversale (13) pouvant être bien pris.

15. Appareil de cuisine manuel (1) selon l'une quelconque des revendications précédentes, **caractérisé en ce qu'**à chaque extrémité de la partie de prise (12) est formée une butée qui correspond de préférence à la section transversale de boîtier de la première section de boîtier (11) et fournit de préférence au moins en partie une surface de pose (15) pour l'appareil de cuisine manuel (1).

16. Appareil de cuisine manuel (1) selon l'une quelconque des revendications précédentes, **caractérisé en ce que** la première et la deuxième sections de boîtier (11, 12) forment un axe longitudinal dans une première position de fonctionnement (I).

17. Appareil de cuisine manuel (1) selon l'une quelconque des revendications précédentes, **caractérisé en ce que** le rétrécissement de section transversale (13) est réalisé seulement sur un côté de l'axe longitudinal, notamment en rétrécissement de 30% par rapport à la section extérieure.

18. Appareil de cuisine manuel (1) selon l'une quelconque des revendications précédentes, **caractérisé en ce que** dans le but de pouvoir faire pivoter la première et la deuxième sections de boîtier (11, 12), une articulation (18) est réalisée entre celles-ci, laquelle articulation est réalisée de préférence sous forme d'une liaison à baïonnette (90) et est disposée de préférence dans un angle de 50° par rapport à l'horizontale, respectivement dans un angle de 40° par rapport à l'axe longitudinal de l'un appareil de cuisine manuel (1) utilisé en position de travail verticale.

19. Appareil de cuisine manuel (1) selon l'une quelconque des revendications précédentes, **caractérisé en ce que** dans la position pivotée des sections de boîtier (11), la deuxième section de boîtier (12) est pivotée de 80° par rapport à la première section de boîtier (11) et prend une deuxième position de fonctionnement (II).

20. Appareil de cuisine manuel (1) selon l'une quelconque des revendications précédentes, **caractérisé en ce que** lesdites mesures d'angle sont réalisées de manière correspondant respectivement de +/- 10°.

21. Appareil de cuisine manuel (1) selon l'une quelconque des revendications précédentes, **caractérisé en ce que** l'appareil de cuisine manuel (1) peut être mis en fonction aussi bien dans la première que la deuxième position de fonctionnement (I, II).
